# EUROPÄISCHE PATENTSCHRIFT

(11) **EP 1 909 076 B1**
(45) Veröffentlichungstag und Bekanntmachung des Hinweises auf die Patenterteilung: **18.05.2011**
(21) Anmeldenummer: 06020845.1
(22) Anmeldetag: 04.10.2006
(51) Int. Cl.: G01F 15/14, G01F 15/18

(54) **Durchflussmesser für fluide Medien**
Flowmeter for fluid media
Débitmetre pour milieux fluides

(43) Veröffentlichungstag der Anmeldung: 09.04.2008
(73) Patentinhaber: Körner, Hans-Holger, 23758 Oldenburg/Holstein (DE)
(72) Erfinder: Körner, Hans-Holger, 23758 Oldenburg/Holstein (DE)
(74) Vertreter: Westphal, Thomas

(56) Entgegenhaltungen:
- EP-A- 0 741 283
- EP-A1- 1 020 711
- DE-A1- 10 103 745

## Beschreibung

Die Erfindung betrifft einen Durchflussmesser für fluide Medien der im Oberbegriff des Anspruchs 1 genannten Art.

Durchflussmesser für fluide Medien, die Ultraschallwellen zur Durchflussmessung verwenden, sind aus dem Stand der Technik, beispielsweise der Patentschrift DE 101 03 745 C2, bekannt.

Der aus der DE 101 03 745 C2 bekannte Durchflussmesser weist eine auf eine Anschlussarmatur montierbare Messkapsel auf, in deren Inneren ein Messrohr mit einer geraden Ultraschallmesstrecke angeordnet ist. Das Messrohr verbindet eine Einström- mit einer Ausströmkammer, welche durch eine Trennebene voneinander getrennt sind. Das fluide Medium wird der Einströmkammer über einen Einströmkanal zugeführt und aus der Ausströmkammer über einen Ausströmkanal abgeführt. Die Messkapsel wird auf die Anschlussarmatur mit einem einseitig offenen Anschlussbereich mit einem Einlass und einem Auslass aufgeschraubt. Das Medium strömt aus dem Auslass der Anschlussarmatur über den Einströmkanal der Messkapsel und die Einströmkammer in die Einströmöffnung des Messrohres, durchströmt die Messtrecke und tritt auf aus der Ausströmöffnung des Messrohres in die Ausströmkammer aus und wird anschließen über den Ausströmkanal der Messkapsel in den Einlass der Anschlussarmatur geleitet.

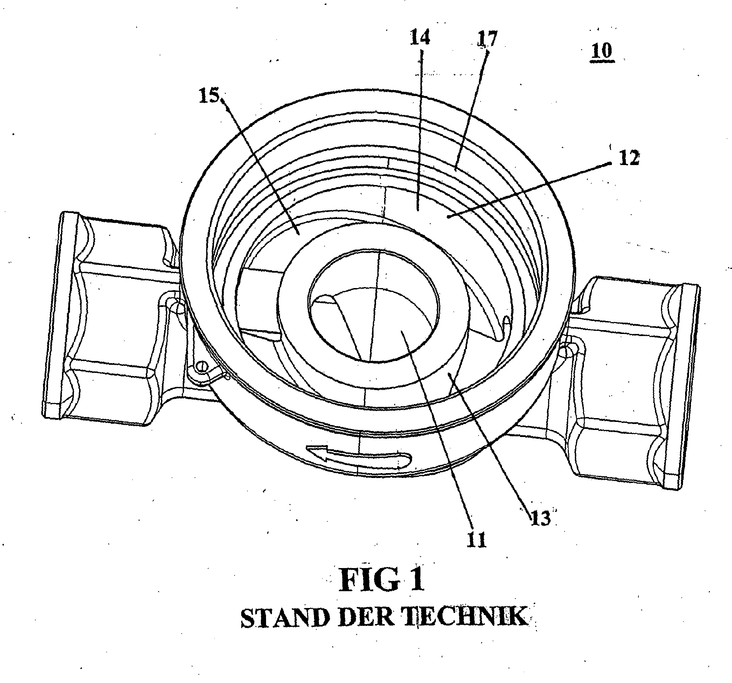

Es ist bekannt, dass das Strömungsprofil an der Ultraschallmesstrecke die Messwerte zur Bestimmung der Durchflussmenge beeinflusst. Das Strömungsprofil wird insbesondere durch die geometrische Gestaltung im Bereich des Einlass und Auslass bestimmt. So beeinflusst beispielsweise die Ausrichtung einer im Umlenkungsbereich des Auslasses (s. Bezugszeichen 15 in Fig. 1) angeordneten schiefen Ebene das Strömungsprofil maßgeblich.

Ein Nachteil der Durchflussmesser der in DE 101 03 745 C2 beschriebenen Bauart ist, dass sich innerhalb einer Serie abweichende Strömungsprofile einstellen können, woraus eine Messunsicherheit resultiert.

Der vorliegenden Erfindung liegt die Aufgabe zugrunde, einen Durchflussmesser der im Oberbegriff des Anspruchs 1 genannten Art zu schaffen, der ein definiertes Strömungsprofil bei Durchflussmessern gleicher Bauart definiert.

Die Erfindung löst diese Aufgabe durch einen Durchflussmesser gemäß Anspruch 1. Bevorzugte Ausführungsformen der Erfindung finden sich in den Unteransprüchen.

Danach weist der Durchflussmesser für fluide Medien für eine Anschlussarmatur mit einen einseitig offenen Anschlussbereich mit einem Einlass und einem Auslass, wobei der Auslass ringförmig mit einer Innenwand, einem Boden und einer Außenwand ausgebildet ist, der Boden eine Neigung zur Anschlussarmaturrohrachse aufweist und die Innenwand des Auslasses zumindest teilweise die Wandung des Einlasses bildet, eine auf den Anschlussbereich der Anschlussarmatur montierbare Messkapsel auf, mit einem Gehäuse, einem in dem Gehäuse angeordneten Messrohrhalter der ein Messrohr mit einer geraden Ultraschallmesstrecke hält, wobei Messrohr und Messrohrhalter miteinander winkelfest gekoppelt oder einstückig ausgebildet sind, das Messrohr eine Einströmkammer mit einer Ausströmkammer verbindet, die Einströmkammer von der Ausströmkammer durch eine Trennebene getrennt ist und die Einströmkammer der Messkapsel über einen Einströmkanal mit dem Auslass der Anschlussarmatur sowie die Ausströmkammer der Messkapsel über einen Ausströmkanal mit dem Einlass der Anschlussarmatur in Verbindung stehen, wobei der Durchflussmesser zusätzlich einen Ringkeil aufweist, der winkelfest mit dem Messrohrhalter gekoppelt oder mit diesem einstückig ausgebildet ist und an seiner unteren Schrägfläche auf die Neigung des Bodens so abgestimmt ist, das er nur in einer definierten Position passt.

Die Erfindung hat erkannt, dass eine Ausrichtung der Einströmöffnung des Messrohrs und der Einströmkammer mittels winkelfester Verbindung von Messrohr mit Messrohrhalter und Ringkeil in Bezug auf die Zuleitung und Auslassöffnung der Anschlussarmatur ein definiertes Strömungsprofil aufweist, das bei allen Durchflussmessern gemäß dem Oberbegriff des Anspruchs 1 gleicher Bauart, nahezu identisch ist. Das gleiche Strömungsprofil der Durchflussmesser erlaubt ein besseren Vergleich der Messergebnisse der Durchflussmesser untereinander, da mit dem gleichem Strömungsprofil der Durchflussmesser ein entsprechend gleicher Einfluss auf das Messergebnis der Strömungsgeschwindigkeit in der Ultraschallmessstrecke einhergeht.

Vorteilhafterweise erstreckt sich der Ringkeil aus dem Einströmkanal der Messkapsel in den Auslass der Anschlussarmatur und ist so abgestimmt, dass er der Neigung des Bodens und vorzugsweise der Form der Außenwand folgt und eine Zuflussöffnung für das in den Auslass der Anschlussarmatur strömende Medium aufweist. Der Ringkeil richtet sich bei der Montage der Messkapsel auf die Anschlussarmatur mit seiner unteren Schrägfläche auf den geneigten Boden des Auslasses der Anschlussarmatur zwangsläufig aus und lässt keine Abweichung von der vorgesehenen Einlassgeometrie zu.

Vorzugsweise ist der Messrohrhalter mit der Messtrecke einteilig ausgebildet. Der Messrohrhalter kann beispielsweise als Rohr quer zur Rohrachse der Anschlussarmatur angeordnet sein und die Ultraschallmesstrecke tragen, die quer zur Rohrachse des Messrohrhalters und parallel zur Anschlussarmaturenrohrachse ausgerichtet ist.

Die Kopplung des Ringkeil mit dem Messrohrhalter kann in beliebiger Art und Weise erfolgen, beispielsweise über eine mechanische, Stift/Loch oder Klebekopplung bzw., soweit dies fertigungstechnisch möglich ist, kann der Messrohrhalter mit dem Ringteil einstückig ausgebildet sein.

Der Ringkeil kann seinerseits mit dem Gehäuse der Messkapsel, beispielsweise über eine mechanische Verbindung gekoppelt sein. Beispielsweise kann eine mechanische Kopplung über sich am Ringkeil befindende Nasen erfolgen, die in korrespondierende Aussparungen an der Innenwand des Gehäuses der Messkapsel einrasten.

Der Ringkeil kann das Strömungsprofil des fluiden Mediums beeinflussende Anordnungen in Form von Stegen oder Rippe unterschiedlichster Form aufweisen, zwischen denen Zwischenräume vorhanden sind, durch die das Medium hindurchfließt. Anordnungen dieser Art sind beispielsweise in der Patenschrift EP 0 565 851 B1 im Detail beschrieben. Die Stege oder Rippen bewirken, dass der Strömungswiderstand des Ringkeils geringer wird und ein Drall der gesamten Flüssigkeitssäule, verbunden mit sinkender Messgenauigkeit an der Ultraschallmessstrecke, weitestgehend vermieden wird. Der Ringkeil kann auch lediglich aus mindestens zwei Rippen/Stegen bzw. Stiften bestehen.

Die Erfindung hat des weiteren erkannt, dass sich auf die Messgenauigkeit nachteilig auswirkende Turbulenzen an der Einströmöffnung des Messrohres mindern lassen, wenn ein Einströmen des fluiden Mediums in die Einströmöffnung des Messrohrs allseitig und in nahezu gleicher Volumenmenge ermöglicht wird. Gemäß einer bevorzugten Ausführungsform der Erfindung ist es hierfür von Vorteil, wenn die Einströmöffnung des Messrohrs eine Form aufweist, die der Form der der Einströmöffnung gegenüberliegenden Innenwand des Gehäuses in gleichem Abstand folgt und/ oder mit zunehmenden Abstand zu dem Einströmkanal einen größeren Abstand zu der Gehäuseinnenwand aufweist. Im letzterem Fall ist die Einströmöffnung beispielsweise als Schräge ausgebildet und ermöglicht ein hereinströmen nahezu gleicher Volumina von allen Seiten der Einströmöffnung des Messrohres in die Ultraschallmessstrecke.

Die Erfindung hat ebenfalls erkannt, dass die aus dem Einströmkanal in die Einströmkammer strömenden Fluidströme oberhalb der Einströmöffnung des Messrohrs aufeinander treffen, Turbulenzen und Verwirbelungen bilden und damit die Messgenauigkeit verschlechtern. Problematisch ist insbesondere, dass das sich ergebende Turbulenzprofil über den ganzen vorgesehenen Messbereich des Messwertgebers vom Anlaufwert bis zum Auslegungs-Nennwert unterschiedlich ist. Die Erfindung löst dieses Problem mit einer oberhalb der Einströmöffnung des Messrohrs angeordnete Trennwand, die vorzugsweise als ein sich aus der Einströmöffnung erstreckender Steg ausgebildet ist und ein Aufeinanderprallen der an der Einströmöffnung des Messrohrs vorbei fließenden und sich oberhalb des Messrohrs treffenden Fluidströme weitestgehend vermeidet.

Der erfindungsgemäße Durchflussmesser kann auch Siebe oder Strömungsgleichrichter, vorzugsweise im Bereich des Einströmkanals der Messkapsel aufweisen um unter Umständen auftretende starke Strömungsunterschiede und Einlaufturbulenzen auszugleichen.

Der erfindungsgemäße Durchflussmesser kann ebenfalls einen Wärmefühler zur Wärmemessung im Bereich der Anschlussarmatur oder der Messkapsel aufweisen. -Vorzugsweise befindet sich der Wärmefühler im Ausströmkanal der Messkapsel, zentral in der Strömung.

Ein Ausführungsbeispiel der Erfindung wird nachfolgend anhand von Zeichnungen veranschaulicht. Es zeigen:
- Fig. 1: eine perspektivische Ansicht einer Anschlussarmatur des Standes der Technik mit einem einseitig offenen Anschlussbereich;
- Fig. 2: einen Schnitt längst durch einen erfindungsgemäßen Durchflussmesser, der auf eine Anschlussarmatur gemäß Fig. 1 montiert ist;
- Fig. 3: einen Schnitt quer durch einen erfindungsgemäßen Durchflussmesser, der auf eine Anschlussarmatur gemäß Fig. 1 montiert ist, entlang einer Linie A-A aus Fig. 2;
- Fig. 4: eine perspektivische Ansicht des Messrohrhalters mit Messrohr, Trennebene und Ringkeil.

Fig. 1 zeigt in perspektivischer Ansicht eine aus dem Stand der Technik, beispielsweise DE 101 03 745 C2, bekannte Anschlussarmatur 10 mit einem einseitig offenen Anschlussbereich mit einem Einlass 11 und einem Auslass 12, die mit den korrespondierenden Anschlüssen der Messkapsel (nicht dargestellt) in Verbindung stehen. Die Verbindung wird über ein Gewinde 17 hergestellt. Der Auslass 12 ist ringförmig mit einer Innenwand 13, einem Boden 15 und einer Außenwand 14 ausgebildet. Die Innenwand 13 bildet gleichzeitig einen Teil der Wandung des Einlasses 11. Der Boden 15 weist eine Neigung in Bezug auf die (nicht dargestellte) Anschlussarmaturenrohrachse auf.

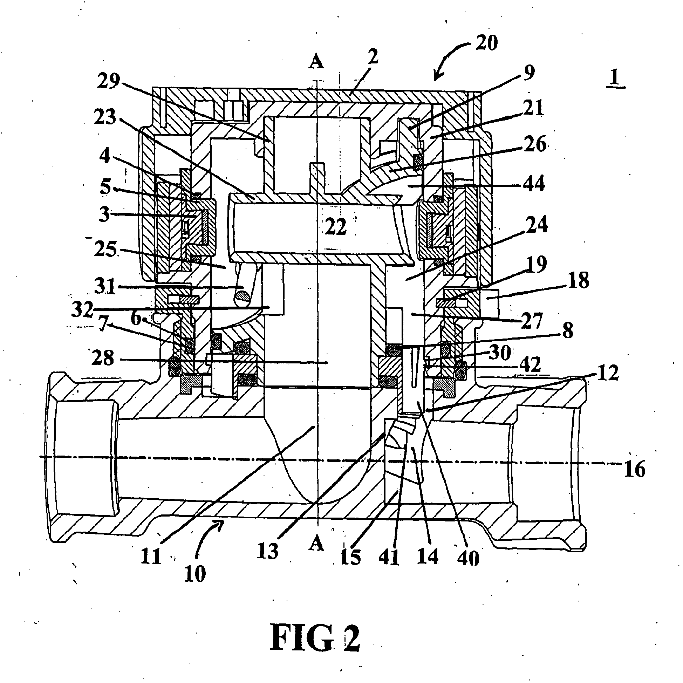

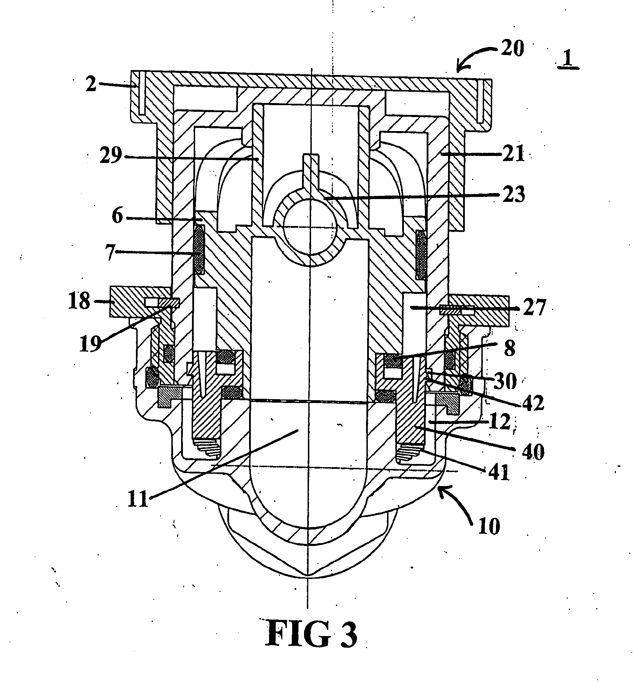

Fig. 2 und 3 zeigen schematisch den Aufbau eines erfindungsgemäßen Durchflussmessers 1, dessen Messkapsel 20 auf die in Fig. 1 dargestellte Anschlussarmatur 10 aufmontiert ist. Die in Fig. 1 genannten Bauteile finden sich mit gleichen Bezugszeichen in den Fig. 2 und 3 wieder.

Unter einem Deckel 2 befindet sich ein Gehäuse 21, in dessen Innenraum ein röhrenförmiger Messrohrhalter 29 mit einem Messrohr 23 angeordnet ist, das den Messrohrhalter 29 quer zur Messrohrhalterachse durchbricht. Messrohr 23 und Messrohrhalter 29 sind aus einem Stück geformt. In der Nähe beider Enden des Messrohr 23 weist das Gehäuse 21 Aufnahmen für Ultraschallwandler 3 auf, die mit ihren Kopfbereich und einer aufgesetzten Kappe 5 die Wand des Gehäuses 21 durchbrechen und in die gerade Ultraschallmessstrecke des Messrohrs 23 hineinweisen. Dichtungen 4 (O-Ring) dichten die zwischen den Ultraschallwandlern 3 bzw. deren Kappen 5 und dem Gehäuse 21 vorhandenen Zwischenräume ab. Das Messrohr 23 verbindet eine Einströmkammer 24 mit einer Ausströmkammer 25, die durch eine schräge bzw. gewellte Trennebene 26 getrennt sind. Das einstückige Bauteil aus Messrohrhalter 29, Messrohr 23 und Trennebene 26 wird nachfolgend als Kapsel bezeichnet. Die Kapsel weist ein sich aus der Kapsel erstreckenden Stift 9 auf, der in eine entsprechende Aussparung im Gehäuse 21 greift und die Kapsel gegen ein Verdrehen in Bezug auf das Gehäuse 21 sichert. Die Trennebene 26 weist in ihren randständigen Bereich eine Dichtungsaufnahme 6 für eine Dichtung 7 auf, die den zwischen der Trennebene 26 und der Innenwand des Gehäuses 21 vorhandenen Zwischenraum abdichtet.

Die mit der Einströmkammer 24 in Verbindung stehende Einströmöffnung des Messrohrs 23 ist angeschrägt und weist in ihrem oberen Bereich einen sich aus der Einströmöffnung erstreckenden Steg 44. auf. Die Einströmkammer 24 steht über einen Einströmkanal 27 mit dem Auslass 12 und die Ausströmkammer 25 über ein Fenster 32 und einen Ausströmkanal 28 mit dem Einlass 11 der Anschlussarmatur 10 in Verbindung. Ein Wärmefühler 31 ist zentral im Ausströmkanal 28 positioniert. An den Fuß des röhrenförmigen Messrohrhalter 29 ist ein Ringkeil 40 gekoppelt, der sich aus dem Einströmkanal 27 der Messkapsel 20 in den Auslass 12 der Anschlussarmatur 10 erstreckt. Der Ringkeil 40 ist in Form von miteinander verbundenen Stegen 41 ausgebildet. In seinem oberen Bereich weist der Ringkeil gefederte Nasen 42 auf, die in korrespondierende Aussparungen 30 an der Innenwand des Gehäuses 21 einrasten.

Das Einschrauben der Messkapsel 20 in die Anschlussarmatur 10 erfolgt durch einen gegen die Messkapsel verdrehbaren Kopfring 18, der durch einen Sprengring 19 verriegelt ist.

Um die sich summierenden Toleranzen der Kette: Gehäuse 21, Kopfring 18, Sprengring 19 und Kapsel 9 auszugleichen, weist der erfindungsgemäße Durchflussmesser des weiteren eine Dichtung 8 auf, beispielsweise ein O-Ring, die als Feder dient und die gesamte Messkammer 9 gegen den inneren Dichtsitz presst.

Zum besseren Verständnis wird der Weg des fluiden Mediums in dem erfindungsgemäßen Durchflussmesser nachfolgend kurz zusammengefasst: Das fluide Medium (nicht dargestellt) tritt durch die Zwischenräume der Stege bzw. Rippen 41 des Ringkeil 40 hindurch, durchströmt dabei den Auslass 12 der Anschlussarmatur 10 und den Einströmkanal 27 der Messkapsel 20, passiert die Einströmkammer 24, durchströmt die Messtrecke 22 in dem Messrohr 23, wird aus dem Messrohr 23 in die Ausströmkammer 25 geführt, bevor es durch das Fenster 32 in den Ausströmkanal 28 der Messkapsel und von dort weiter in den Einlass 11 der Anschlussarmatur 10 abfließt.

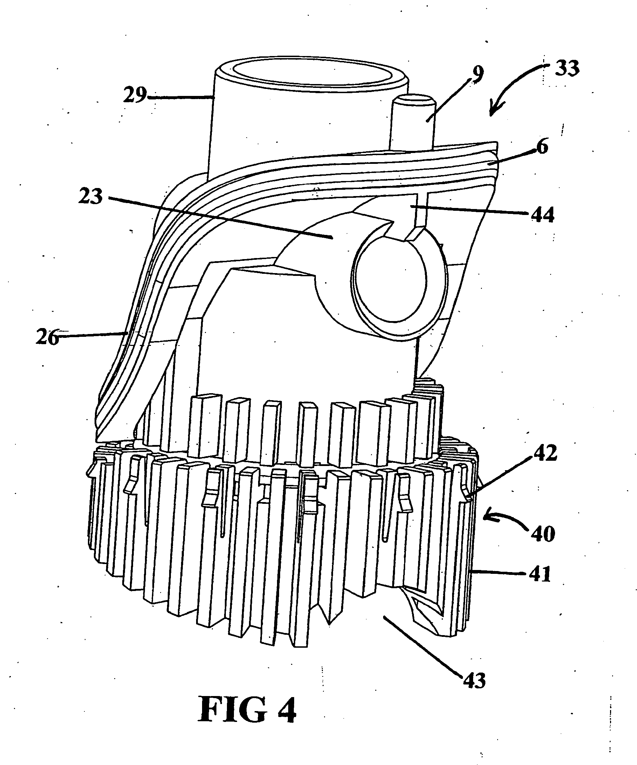

Fig. 4 zeigt die Kapsel 33 mit den an dem Fuß der Kapsel 33 gekoppelten Ringkeil 40 in perspektivischer Ansicht. Besonders deutlich ist an der Kapsel 33 die sich aus dem Messrohr 23 ersteckende Trennwand 44 und der Stift 9 zu erkennen. An dem Ringkeil 40 ist deutlich zu sehen, wie seine untere Schrägfläche, gebildet durch die Fußenden der Stege bzw. Rippen, auf die Neigung des in Fig. 1 zu erkennenden Bodens 15 und die runde Form der Außenwand 14 der Anschlussarmatur 10 abgestimmt ist. Ebenfalls ist ersichtlich, dass die den Ringkeil 40 bildenden Stege bzw. Rippen eine Zuflussöffnung 43 freilassen und einzelne Stege 41 Nasen 42 für die entsprechenden Aussparungen an der Gehäuseinnenwand (nicht dargestellt) aufweisen.

### Bezugszeichenliste

- 1: Durchflussmesser
- 2: Deckel
- 3: Ultraschallwandler
- 4: Dichtung
- 5: Kappe
- 6: Dichtungsaufnahme
- 7: Dichtung
- 8: Dichtung
- 9: Stift
- 10: Anschlussarmatur
- 11: Einlass
- 12: Auslass
- 13: Innenwand
- 14: Außenwand
- 15: Boden
- 16: Anschlussarmaturrohrachse
- 17: Gewinde
- 18: Kopfring
- 19: Sprengring
- 20: Messkapsel
- 21: Gehäuse
- 22: Ultraschallmesstrecke
- 23: Messrohr
- 24: Einströmkammer
- 25: Ausströmkammer
- 26: Trennebene
- 27: Einströmkanal
- 28: Ausströmkanal
- 29: Messrohrhalter
- 30: Aussparung
- 31: Wärmefühler
- 32: Fenster
- 33: Kapsel
- 40: Ringkeil
- 41: Steg/Rippe
- 42: Nasen
- 43: Zuflussöffnung
- 44: Trennwand

## Patentansprüche

1. Durchflussmesser (1) für fluide Medien für eine Anschlussarmatur (10) mit einen einseitig offenen Anschlussbereich mit
- einem Einlass (11) und
- einem Auslass (12),
- wobei der Auslass (12) ringförmig mit einer Innenwand (13), einem Boden (15) und einer Außenwand (14) ausgebildet ist, der Boden (15) eine Neigung zur Anschlussarmaturrohrachse (16) aufweist und die Innenwand (13) des Auslasses (12) zumindest teilweise die Wandung des Einlasses (11) bildet,
- der eine auf den Anschlussbereich der Anschlussarmatur (10) montierbare Messkapsel (20) aufweist mit
- einem Gehäuse (21),
- einem in dem Gehäuse (21) angeordneten Messrohrhalter (29) der
- ein Messrohr (23) mit einer geraden Ultraschallmesstrecke (22) hält, wobei
- Messrohr (23) und Messrohrhalter (29) miteinander winkelfest gekoppelt oder einstückig ausgebildet sind,
- das Messrohr (23) eine Einströmkammer (24) mit einer Ausströmkammer (25) verbindet,
- die Einströmkammer (24) von der Ausströmkammer (25) durch eine Trennebene (26) getrennt ist und
- die Einströmkammer (24) der Messkapsel (20) über einen Einströmkanal (27) mit dem Auslass (12) der Anschlussarmatur (10) sowie
- die Ausströmkammer (25) der Messkapsel (20) über einen Ausströmkanal (28) mit dem Einlass (11) der Anschlussarmatur (10) in Verbindung stehen,
**dadurch gekennzeichnet,**
**dass** der Durchflussmesser (1) zusätzlich einen Ringkeil (40) aufweist, der winkelfest mit dem Messrohrhalter (29) gekoppelt oder mit diesem einstückig ausgebildet ist und an seiner unteren Schrägfläche auf die Neigung des Bodens (15) so abgestimmt ist, das er nur in einer definierten Position passt.

2. Durchflussmesser (1) nach Anspruch 1, **dadurch gekennzeichnet, dass** sich der Ringkeil (40) aus dem Einströmkanal (27) der Messkapsel (20) in den Auslass (12) der Anschlussarmatur (10) erstreckt, der Ringkeil (40) so abgestimmt ist, dass er der Neigung des Bodens (15) und vorzugsweise der Form der Außenwand (14) folgt und eine Zuflussöffnung (43) für das in den Auslass (12) strömende Medium aufweist.

3. Durchflussmesser (1) nach einem der vorherigen Ansprüche, **dadurch gekennzeichnet dass** die Kopplung des Ringkeil (40) mit dem Messrohrhalter (29) eine mechanische, Stift/Loch oder Klebekopplung ist.

4. Durchflussmesser (1) nach einem der vorherigen Ansprüche, **dadurch gekennzeichnet, dass** der Ringkeil (40) das Strömungsprofil des fluiden Mediums beeinflussende Anordnungen in Form von Stegen oder Rippe (41) aufweist, zwischen denen Zwischenräume vorhanden sind, durch die das Medium hindurchfließt.

5. Durchflussmesser (1) nach einem der vorherigen Ansprüche, **dadurch gekennzeichnet, dass** das Messrohr (23) mit der Ultraschallstrecke (22) parallel, zur Anschlussarmaturenrohrachse (16) ausgerichtet ist.

6. Durchflussmesser (1) nach einem der vorherigen Ansprüche, **dadurch gekennzeichnet, dass** der Ringkeil (40) mit dem Gehäuse (21) der Messkapsel (20) gekoppelt ist.

7. Durchflussmesser (1) nach Anspruch 6, **dadurch gekennzeichnet, dass** der Ringkeil (40) mit dem Gehäuse (21) der Messkapsel (20) mechanisch gekoppelt ist.

8. Durchflussmesser nach Anspruch 7, **dadurch gekennzeichnet, dass** der Ringkeil (40) Nasen (42) aufweist, die in korrespondierende Aussparungen (30) an der Innenwand des Gehäuses (21) einrasten.

9. Durchflussmesser (1) nach einem der vorherigen Ansprüche, **dadurch gekennzeichnet, dass** die mit der Einströmkammer (24) in Verbindung stehenden Einströmöffnung des Messrohrs (23) eine Form aufweist, die der Form der der Einströmöffnung gegenüberliegenden Innenwand des Gehäuses (21) in gleichem Abstand folgt.

10. Durchflussmesser (1) nach einem der vorherigen Ansprüche, **dadurch gekennzeichnet, dass** die Einströmkammer (24) in ihrem in Bezug auf den Einströmkanal (27) distalen Bereich eine oberhalb der Einströmöffnung des Messrohrs (23) angeordnete Trennwand (44) aufweist, die vorzugsweise als ein sich aus der Einströmöffnung erstreckender Steg ausgebildet ist.

## Claims

1. Flowmeter (1) for fluid media for a connecting fitting (10), having a connecting region open on one side and comprising
- an inlet (11) and
- an outlet (12),
- the outlet (12) being designed in the shape of a ring with an inner wall (13), a bottom (15) and an outer wall (14), the bottom (15) having an inclination to the connecting fitting tube axis (16), and the inner wall (13) of the outlet (12) forming the wall of the inlet (11) at least in part,
- which flowmeter has the measuring capsule (20) which can be mounted on the connecting region of the connecting fitting (10) and has
- a housing (21);
- a measuring tube holder (29) arranged in the housing (21) and
- holding a measuring tube (23) with a straight ultrasonic measuring section (22),
- the measuring tube (23) and measuring tube holder (29) being coupled to one another at a fixed angle or designed in one piece,
- the measuring tube (23) connecting an inflow chamber (24) to an outflow chamber (25),
- the inflow chamber (24) being separated from the outflow chamber (25) by a separation plane (26), and
- the inflow chamber (24) of the measuring capsule (20) being connected via an inflow channel (27) to the outlet (12) of the connecting fitting (10), and
- the outflow chamber (25) of the measuring capsule (20) being connected via an outflow channel (28) to the inlet (11) of the connecting fitting (10),
**characterized**
**in that** the flow meter (1) additionally has an annular wedge (40) which is coupled at a fixed angle to the measuring tube holder (29), or is designed in one piece therewith, and is matched at its lower bevel with the inclination of the bottom (15) so that it fits only in a defined position.

2. Flowmeter (1) according to Claim 1, **characterized in that** the annular wedge (40) extends from the inflow channel (27) of the measuring capsule (20) into the outlet (12) of the connecting fitting (10), and the annular wedge (40) is tailored so that it follows the inclination of the bottom (15) and preferably of the shape of the outer wall (14) and has a supply opening (43) for the medium flowing into the outlet (12).

3. Flowmeter (1) according to one of the preceding claims, **characterized in that** the coupling of the annular wedge (40) to the measuring tube holder (29) is a mechanical, pin/hole or adhesive coupling.

4. Flowmeter (1) according to one of the preceding claims, **characterized in that** the annular wedge (40) has arrangements which influence the flow profile of the fluid medium and take the form of webs or ribs (41) between which intermediate spaces are present through which the medium flows.

5. Flowmeter (1) according to one of the preceding claims, **characterized in that** the measuring tube (23) with the ultrasonic measuring section (22) is aligned parallel to the connecting fitting tube axis (16).

6. Flowmeter (1) according to one of the preceding claims, **characterized in that** the annular wedge (40) is coupled to the housing (21) of the measuring capsule (20).

7. Flowmeter (1) according to claim 6, **characterized in that** the annular wedge (40) is mechanically coupled to the housing (21) of the measuring capsule (20).

8. Flowmeter according to Claim 7, **characterized in that** the annular wedge (40) has lugs (42) which latch into corresponding cutouts (30) on the inner wall of the housing (21).

9. Flowmeter (1) according to one of the preceding claims, **characterized in that** the inflow opening, connected to the inflow chamber (24), of the measuring tube (23) has a shape which follows at an equal spacing the shape of the inner wall, opposite the inflow opening, of the housing (21).

10. Flowmeter (1) according to one of the preceding claims, **characterized in that** in its distal region with reference to the inflow channel (27) the inflow chamber (24) has a separation wall (44) which is arranged above the inflow opening of the measuring tube (23) and is preferably designed as a web extending from the inflow opening.

## Revendications

1. Débitmètre (1) pour milieux fluides pour une armature de raccordement (10) avec une zone de raccordement ouverte d'un côté, comprenant
- une entrée (11), et
- une sortie (12),
- dans lequel la sortie (12) est réalisée de façon annulaire avec une paroi mineure (13), un fond (15) et une paroi extérieure (14), le fond (15) présente une pente par rapport à l'axe de tuyau (16) de l'armature de raccordement, et la paroi intérieure (13) de la sortie (12) constitue au moins en partie la paroi de l'entrée (11),
- ledit débitmètre présentant une capsule de mesure (20) à monter sur la zone de raccordement de l'armature de raccordement (10), comprenant,
- un boîtier (21),
- un support de tube de mesure (29) disposé dans le boîtier (21), qui
- supporte un tube de mesure (23) avec un tronçon droit de mesure par ultrason (22), dans lequel
- le tube de mesure (23) et le support de tube de mesure (29) sont accouplés ensemble à angle fixe ou réalisés de façon intégrale,
- le tube de mesure (23) relie une chambre d'arrivée (24) à une chambre d'écoulement (25),
- la chambre d'arrivée (24) est séparée de la chambre d'écoulement (25) par un plan de séparation (26), et
- la chambre d'arrivée (24) de la capsule de mesure (20) communique par l'intermédiaire d'un canal d'arrivée (27) avec la sortie (12) de l'armature de raccordement (10), et
- la chambre d'écoulement (25) de la capsule de mesure (20) communique par l'intermédiaire d'un canal d'écoulement (28) avec l'entrée (11) de l'armature de raccordement (10),
**caractérisé en ce que**
le débitmètre (1) présente de plus une clavette annulaire (40) qui est accouplée à angle fixe au support de tube de mesure (29) ou est réalisée intégralement avec celui-ci, et qui est adaptée au niveau de sa surface inclinée inférieure à la pente du fond (15) de telle sorte qu'elle ne s'insère que dans une position définie,

2. Débitmètre (1) selon la revendication 1, **caractérisé en ce que** la clavette annulaire (40) s'étend depuis le canal d'arrivée (27) de la capsule de mesure (20) dans la sortie (12) de l'armature de raccordement (10), la clavette annulaire (40) est adaptée de telle sorte qu'elle suit la pente du fond (15) et de préférence la forme de la paroi extérieure (14) et présente une ouverture d'alimentation (43) pour le milieu s'écoulant dans la sortie (12).

3. Débitmètre (1) selon l'une quelconque des revendications précédentes, **caractérisé en ce que** l'accouplement de la clavette annulaire (40) au support de tube de mesure (29) est un accouplement mécanique, un accouplement de type cheville/trou ou un accouplement adhésif.

4. Débitmètre (1) selon l'une quelconque des revendications précédentes, **caractérisé en ce que** la clavette annulaire (40) présente des agencements affectant le profil d'écoulement du milieu fluide, sous la forme d'entretoises ou de nervures (41), entre lesquelles il existe des espaces par lesquels passe le milieu.

5. Débitmètre (1) selon l'une quelconque des revendications précédentes, **caractérisé en ce que** le tube de mesure (23) est parallèle au tronçon à ultrason (22), aligné sur l'axe de tuyau (16) de l'armature de raccordement.

6. Débitmètre (1) selon l'une quelconque des revendications précédentes, **caractérisé en ce que** la clavette annulaire (40) est accouplée au boîtier (21) de la capsule de mesure (20).

7. Débitmètre (1) selon la revendication 6, **caractérisé en ce que** la clavette annulaire (40) est accouplée mécaniquement au boîtier (21) de la capsule de mesure (20).

8. Débitmètre selon la revendication 7, **caractérisé en ce que** la clavette annulaire (40) présente des nez (42) qui s'enclenchent dans des évidements (30) correspondants sur la paroi intérieure du boîtier (21).

9. Débitmètre (1) selon l'une quelconque des revendications précédentes, **caractérisé en ce que** l'ouverture d'arrivée du tube de mesure (23), en communication avec la chambre d'arrivée (24), présente une forme suivant à distance égale la forme de la paroi intérieure du boîtier (21) opposée à l'ouverture d'arrivée.

10. Débitmètre (1) selon l'une quelconque des revendications précédentes, **caractérise en ce que** la chambre d'arrivée (24) présente dans sa partie distale, par rapport au canal d'arrivée (27) une cloison (44) disposée en amont de l'ouverture d'arrivée du tube de mesure (23) et réalisée de préférence comme une entretoise s'étendant à partir de l'ouverture d'arrivée.
